(19) **Europäisches Patentamt**
**European Patent Office**
**Office européen des brevets**

(11) **EP 4 280 784 A2**

(12) **EUROPEAN PATENT APPLICATION**

(43) Date of publication:
**22.11.2023 Bulletin 2023/47**

(21) Application number: **23201288.0**

(22) Date of filing: **12.09.2014**

(51) International Patent Classification (IPC):
***H04W 74/00*** *(2009.01)*

(52) Cooperative Patent Classification (CPC):
**H04W 52/367; H04W 52/50; H04W 74/00;**
H04W 52/146

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2013 US 201361877920 P**
**11.09.2014 US 201414484042**

(62) Document number(s) of the earlier application(s) in
accordance with Art. 76 EPC:
**17181027.8 / 3 249 994**
**14772542.8 / 3 045 006**

(71) Applicant: **QUALCOMM Incorporated**
**San Diego, CA 92121-1714 (US)**

(72) Inventors:
 • **XU, Hao**
 **San Diego, CA 92121-1714 (US)**

 • **CHEN, Wanshi**
 **San Diego, CA 92121-1714 (US)**
 • **JI, Tingfang**
 **San Diego, CA 92121-1714 (US)**

(74) Representative: **Bardehle Pagenberg**
**Partnerschaft mbB**
**Patentanwälte Rechtsanwälte**
**Prinzregentenplatz 7**
**81675 München (DE)**

Remarks:
This application was filed on 09.10.2023 as a
divisional application to the application mentioned
under INID code 62.

(54) **UPLINK CHANNEL DESIGN WITH COVERAGE ENHANCEMENTS**

(57)    Aspects of the present disclosure provide techniques for providing uplink channel coverage enhancements for wireless devices. An example method generally includes determining a power difference value based on a target preamble received power level and a maximum preamble transmit power level, selecting a bundling size for uplink transmissions based on the determined difference, and sending the uplink transmissions, in accordance with the selected bundling size.

FIG. 6

Description

CROSS-REFERENCE TO RELATED APPLICATIONS

This application claims benefit of U.S. Provisional Patent Application Serial No. 61/877,920, entitled UPLINK CHANNEL DESIGN WITH COVERAGE ENHANCEMENTS, filed September 13, 2013, and assigned to the assignee hereof, the contents of which are hereby incorporated by reference.

BACKGROUND

I. Field

Certain aspects of the present disclosure generally relate to wireless communications and, more particularly, to techniques for uplink channel coverage enhancements.

II. Background

Wireless communication systems are widely deployed to provide various types of communication content such as voice, data, and so on. These systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, 3rd Generation Partnership Project (3GPP) Long Term Evolution (LTE) including LTE-Advanced systems and orthogonal frequency division multiple access (OFDMA) systems.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (or uplink) refers to the communication link from the terminals to the base stations. This communication link may be established via a single-input single-output, multiple-input single-output or a multiple-input multiple-output (MIMO) system.

Wireless devices comprise user equipments (hereinafter "UEs") and remote devices. A UE is a device that operates under direct control by humans. Some examples of UEs include cellular phones, smart phones, personal digital assistants (PDAs), wireless modems, handheld devices, laptop computers, netbooks, tablets, ultrabooks, smartbooks, etc. A remote device is a device that operates without being directly controlled by humans. Some examples of remote devices include sensors, meters, monitors, location tags, etc. A remote device may communicate with a base station, a UE, another remote device, or some other entity. Machine type communication (MTC) refers to communication involving at least one remote device on at least one end of the communication.

SUMMARY

Certain aspects of the present disclosure provide a method for wireless communications which may be performed, for example, by a UE. The method generally includes determining a power difference value based on a target preamble receive power level and a maximum preamble transmit power level, selecting a bundling size for uplink transmissions based on the determined difference, and sending the uplink transmission, in accordance with the selected bundling size.

Certain aspects of the present disclosure provide an apparatus for wireless communications by a UE. The apparatus generally includes at least one processor configured to determine a power difference value based on a target preamble receive power level and a maximum preamble transmit power level, select a bundling size for uplink transmissions based on the determined difference, and send the uplink transmission, in accordance with the selected bundling size.

Certain aspects of the present disclosure provide an apparatus for wireless communications by a UE. The apparatus generally includes means for determining a power difference value based on a target preamble receive power level and a maximum preamble transmit power level, means for selecting a bundling size for uplink transmissions based on the determined difference, and means for sending the uplink transmission, in accordance with the selected bundling size.

Certain aspects of the present disclosure provide a computer program product for wireless communications by a UE. The computer program product comprises a computer-readable medium and generally includes code to determine a power difference value based on a target preamble receive power level and a maximum preamble transmit power level, code to select a bundling size for uplink transmissions based on the determined difference, and code to send the uplink transmissions, in accordance with the selected bundling size.

Certain aspects of the present disclosure provide a method for wireless communications which may be performed, for example, by a UE. The method generally includes sending a first uplink transmission at a power level and a bundling size and adjusting the bundling size for one or more subsequent uplink transmissions, if the first uplink transmission fails.

Certain aspects of the present disclosure provide an apparatus for wireless communications by a UE. The apparatus generally includes at least one processor configured to send a first uplink transmission at a power level and a bundling size and adjust the bundling size for one or more subsequent uplink transmissions, if the first uplink transmission fails.

Certain aspects of the present disclosure provide an apparatus for wireless communications by a UE. The apparatus generally includes means for sending a first uplink transmission at a power level and a bundling size, and means for adjusting the bundling size for one or more subsequent uplink transmissions, if the first uplink transmission fails.

Certain aspects of the present disclosure provide a computer program product for wireless communications by a UE. The computer program product comprises a computer-readable medium and generally includes code to send a first uplink transmission at a power level and a bundling size, and code for adjusting the bundling size for one or more subsequent uplink transmissions, if the first uplink transmission fails.

Certain aspects of the present disclosure provide a method for wireless communications which may be performed, for example, by a UE. The method generally includes determining a transmission power level for an uplink transmission based, at least in part, on a transmission power level parameter that has a first value for uplink transmissions without bundling and a second value for uplink transmissions with bundling and sending the uplink transmission, in accordance with the determined transmission power level.

Certain aspects of the present disclosure provide an apparatus for wireless communications by a UE. The apparatus generally includes at least one processor configured to determine a transmission power level for an uplink transmission based, at least in part, on a transmission power level parameter that has a first value for uplink transmissions without bundling and a second value for uplink transmissions with bundling and send the uplink transmission, in accordance with the determined transmission power level.

Certain aspects of the present disclosure provide an apparatus for wireless communications by a UE. The apparatus generally includes means for determining a transmission power level for an uplink transmission based, at least in part, on a transmission power level parameter that has a first value for uplink transmissions without bundling and a second value for uplink transmissions with bundling and means for sending the uplink transmission, in accordance with the determined transmission power level.

Certain aspects of the present disclosure provide a computer program product for wireless communications by a UE. The computer program product comprises a computer readable medium and generally include code to determine a transmission power level for an uplink transmission based, at least in part, on a transmission power level parameter that has a first value for uplink transmissions without bundling and a second value for uplink transmissions with bundling and code to send the uplink transmission, in accordance with the determined transmission power level.

Certain aspects of the present disclosure provide a method for wireless communications which may be performed, for example, by a UE. The method generally includes determining a bundling size to use for a random access channel (RACH) procedure, wherein different bundling sizes are used for contention-based and non contention-based RACH procedures and performing the RACH procedure, in accordance with the determined bundling size.

Certain aspects of the present disclosure provide an apparatus for wireless communications by a UE. The apparatus generally includes at least one processor configured to determine a bundling size to use for a random access channel (RACH) procedure, wherein different bundling sizes are used for contention-based and non contention-based RACH procedures, and perform the RACH procedure, in accordance with the determined bundling size.

Certain aspects of the present disclosure provide an apparatus for wireless communications by a UE. The apparatus generally includes means for determining a bundling size to use for a random access channel (RACH) procedure, wherein different bundling sizes are used for contention-based and non contention-based RACH procedures, and means for performing the RACH procedure, in accordance with the determined bundling size.

Certain aspects of the present disclosure provide a computer program product for wireless communications by a UE. The computer program product comprises a computer-readable medium and generally includes code to determine a bundling size to use for a random access channel (RACH) procedure, wherein different bundling sizes are used for contention-based and non contention-based RACH procedures, and code to perform the RACH procedure, in accordance with the determined bundling size.

Numerous other aspects are provided including apparatus, systems, computer program products, and processing systems capable of performing operations for the methods described above.

## BRIEF DESCRIPTION OF THE DRAWINGS

FIG. 1 is a block diagram conceptually illustrating an example wireless communication network, in accordance with certain aspects of the present disclosure.

FIG. 2 is a block diagram conceptually illustrating an example of an evolved node B (hereinafter "eNB") in communication with a UE in a wireless communications network, in accordance with certain aspects of the present disclosure.

FIG. 3 is a block diagram conceptually illustrating an example frame structure for a particular radio access technology (hereinafter "RAT") for use in a wireless communications network, in accordance with certain aspects of the present disclosure.

FIG. 4 illustrates example subframe formats for the downlink with a normal cyclic prefix, in accordance with certain aspects of the present disclosure.

FIG. 5 illustrates example operations for wireless communications which may be performed, for example, by a UE, in accordance with certain aspects of the present disclosure.

FIG. 6 illustrates an example message flow diagram showing messages that may be exchanged between an eNB and UE, in accordance with certain aspects of the present disclosure.

FIG. 7 illustrates example operations for wireless communications which may be performed, for example, by a UE, in accordance with certain aspects of the present disclosure.

FIG. 8 illustrates an example message flow diagram showing messages that may be exchanged between an eNB and UE, in accordance with certain aspects of the present disclosure.

FIG. 9 illustrates example operations for wireless communications which may be performed, for example, by a UE, in accordance with certain aspects of the present disclosure.

FIG. 10 illustrates an example message flow diagram showing messages that may be exchanged between an eNB and UE, in accordance with certain aspects of the present disclosure.

FIG. 11 illustrates example operations for wireless communications which may be performed, for example, by a UE, in accordance with certain aspects of the present disclosure.

FIG. 12 illustrates an example message flow diagram showing messages that may be exchanged between an eNB and UE, in accordance with certain aspects of the present disclosure.

## DETAILED DESCRIPTION

In some systems, UEs may have differing coverage properties based on, for example, the number of receive and/or transmit chains the UE has, the location of the UE, the mode in which the UE is operating, and the frequency at which the UE is operating. Some UEs may have limited coverage relative to other UEs. For example, a low cost UE may have a single receive and/or transmit chain, which limits DL and/or UL coverage relative to UEs with multiple receive and/or transmit chains. Aspects of the present disclosure provide for using TTI bundling for wireless communications, which may allow for uplink channel coverage enhancements for some UEs, such as low cost, low data rate UEs.

For some systems, certain types of UEs may have limited coverage relative to other types of UEs. For example, some types of low cost UEs may have only a single receive or transmit chain, thereby limiting DL and/or UL coverage, while other types of UEs benefit from multiple receive and/or transmit chains. For example, some UEs may be operating in Voice over IP (hereinafter "VoIP") mode when the user is at a remote location or in locations such as a basement. As another example, some UEs may be operating in a high frequency band. Techniques presented herein may help enhance coverage to such UEs.

The detailed description set forth below, in connection with the appended drawings, is intended as a description of various configurations and is not intended to represent the only configurations in which the aspects described herein may be practiced. The detailed description includes specific details for the purpose of providing a thorough understanding of the various aspects set forth herein. However, it will be apparent to those skilled in the art that these concepts may be practiced without these specific details. In some instances, well-known structures and components are shown in block diagram form in order to avoid obscuring such aspects.

The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "network" and "system" are often used interchangeably. A CDMA network may implement a radio technology such as Universal Terrestrial Radio Access (UTRA), CDMA2000, etc. UTRA includes Wideband-CDMA (W-CDMA), Time Division Synchronous CDMA (TD-SCDMA), and other variants of CDMA. CDMA2000 includes the IS-2000, IS-95 and IS-856 standards. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, etc. UTRA and E-UTRA are part of Universal Mobile Telecommunication System (UMTS). 3GPP Long Term Evolution (LTE) and LTE-Advanced (LTE-A), in both frequency division duplex (FDD) and time division duplex (TDD), are new releases of UMTS that use E-UTRA, which employs OFDMA on the downlink and SC-FDMA on the uplink. UTRA, E-UTRA, UMTS, LTE, LTE-A and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the wireless networks and radio technologies mentioned above as well as other wireless networks and radio technologies. For clarity, certain aspects of the techniques are described below for LTE/LTE-A, and LTE/LTE-A terminology is used in much of the description below.

## AN EXAMPLE WIRELESS COMMUNICATION SYSTEM

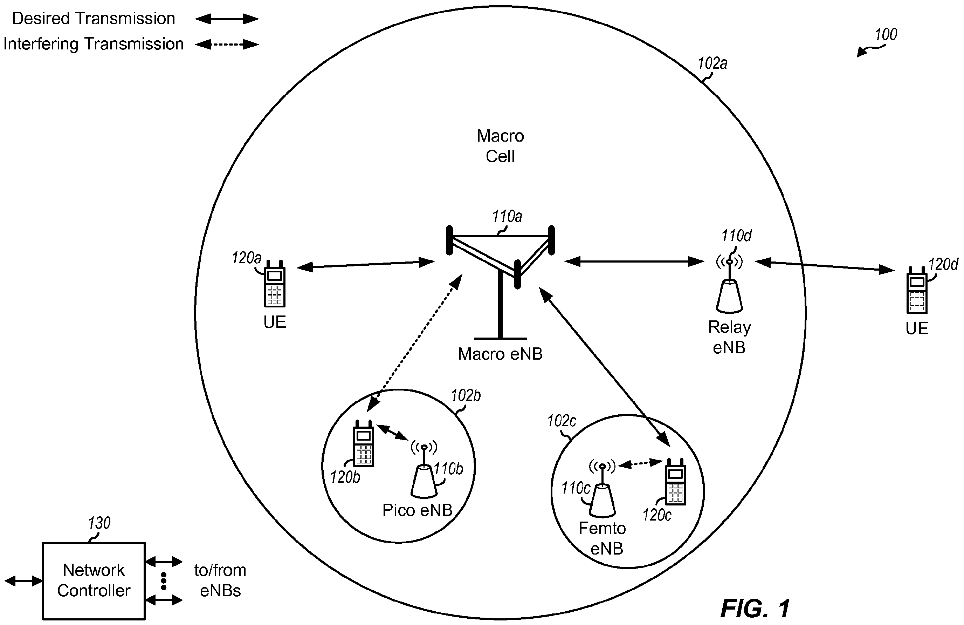

FIG. 1 shows a wireless communication network 100, which may be an LTE network or some other wireless network. Wireless network 100 may include a number of eNBs 110 and other network entities. An eNB is an entity that communicates with UEs and may also be referred to as a base station, a Node B, an access point (AP), etc. Each eNB may provide communication coverage for a particular geographic area. In 3GPP, the term "cell" can refer to a coverage area of an eNB and/or an eNB subsystem serving this coverage area, depending on the context in which the term is used.

An eNB may provide communication coverage for a macro cell, a pico cell, a femto cell, and/or other types of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). An eNB for a macro cell may be referred to as a macro eNB. An eNB for a pico cell may be referred to as a pico eNB. An eNB for a femto cell may be referred to as a femto eNB or a home eNB (HeNB). In the example shown in FIG. 1, an eNB 110a may be a macro eNB for a macro cell 102a, an eNB 110b may be a pico eNB for a pico cell 102b, and an eNB 110c may be a femto eNB for a femto cell 102c. An eNB may support one or multiple (e.g., three) cells. The terms "eNB", "base station," and "cell" may be used interchangeably herein.

Wireless network 100 may also include relay stations. A relay station is an entity that can receive a transmission of data from an upstream station (e.g., an eNB or a UE) and send a transmission of the data to a downstream station (e.g., a UE or an eNB). A relay station may also be a UE that can relay transmissions for other UEs. In the example shown in FIG. 1, a relay station 110d may communicate with macro eNB 110a and a UE 120d in order to facilitate communication between eNB 110a and UE 120d. A relay station may also be referred to as a relay eNB, a relay base station, a relay, etc.

Wireless network 100 may be a heterogeneous network that includes eNBs of different types, e.g., macro eNBs, pico eNBs, femto eNBs, relay eNBs, etc. These different types of eNBs may have different transmit power levels, different coverage areas, and different impact on interference in wireless network 100. For example, macro eNBs may have a high transmit power level (e.g., 5 to 40 W) whereas pico eNBs, femto eNBs, and relay eNBs may have lower transmit power levels (e.g., 0.1 to 2 W).

A network controller 130 may couple to a set of eNBs and may provide coordination and control for these eNBs. Network controller 130 may communicate with the eNBs via a backhaul. The eNBs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station (MS), a subscriber unit, a station (STA), etc. A UE may be a cellular phone, a personal digital assistant (PDA), a wireless modem, a wireless communication device, a handheld device, a laptop computer, a cordless phone, a wireless local loop (WLL) station, a tablet, a smart phone, a netbook, a smartbook, an ultrabook, etc.

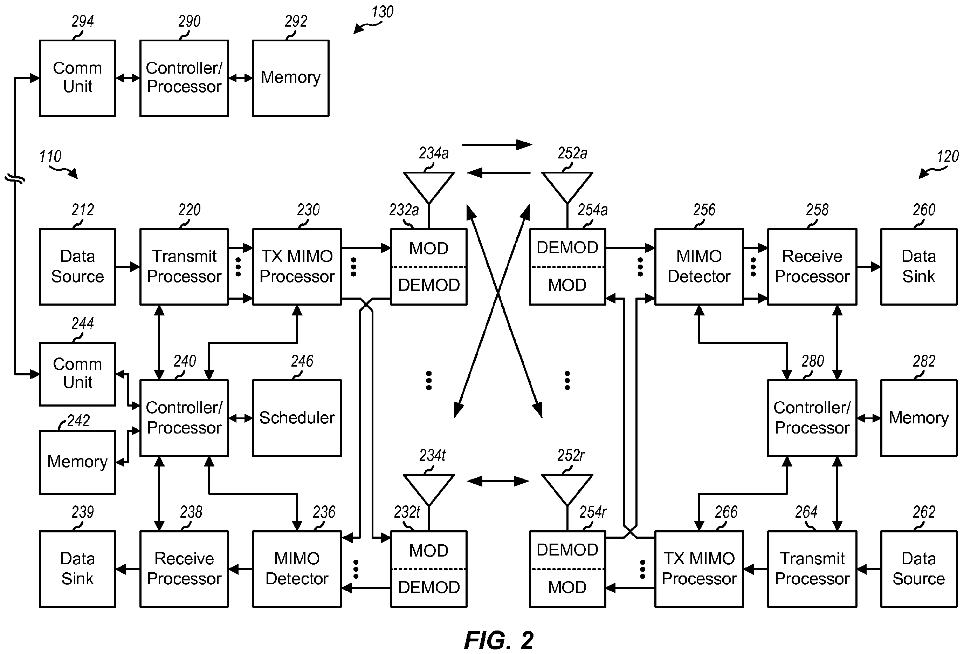

FIG. 2 is a block diagram of a design of base station/eNB 110 and UE 120, which may be one of the base stations/eNBs and one of the UEs in FIG. 1. Base station 110 may be equipped with $T$ antennas 234a through 234t, and UE 120 may be equipped with $R$ antennas 252a through 252r, where in general $T \geq 1$ and $R \geq 1$.

At base station 110, a transmit processor 220 may receive data from a data source 212 for one or more UEs, select one or more modulation and coding schemes (MCSs) for each UE based on channel quality indicators (CQIs) received from the UE, process (e.g., encode and modulate) the data for each UE based on the MCS(s) selected for the UE, and provide data symbols for all UEs. Transmit processor 220 may also process system information (e.g., for semi-static resource partitioning information (SRPI), etc.) and control information (e.g., CQI requests, grants, upper layer signaling, etc.) and provide overhead symbols and control symbols. Processor 220 may also generate reference symbols for reference signals (e.g., the common reference signal (CRS)) and synchronization signals (e.g., the primary synchronization signal (PSS) and secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide $T$ output symbol streams to $T$ modulators (MODs) 232a through 232t. Each modulator 232 may process a respective output symbol stream (e.g., for OFDM, etc.) to obtain an output sample stream. Each modulator 232 may further process (e.g., convert to analog, amplify, filter, and upconvert) the output sample stream to obtain a downlink signal. $T$ downlink signals from modulators 232a through 232t may be transmitted via $T$ antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) its received signal to obtain input samples. Each demodulator 254 may further process the input samples (e.g., for OFDM, etc.) to obtain received symbols. A MIMO detector 256 may obtain received symbols from all $R$ demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. A channel processor may determine reference signal received power (RSRP), received signal strength indicator (RSSI), reference signal received quality (RSRQ), CQI, etc.

On the uplink, at UE 120, a transmit processor 264 may receive and process data from a data source 262 and control information (e.g., for reports comprising RSRP, RSSI, RSRQ, CQI, etc.) from controller/processor 280. Processor 264 may also generate reference symbols for one or more reference signals. The symbols from transmit processor 264 may be precoded by a TX MIMO processor 266 if applicable, further processed by modulators 254a through 254r (e.g., for SC-FDM, OFDM, etc.), and transmitted to base station 110. At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Processor 238 may provide the decoded data to a data sink 239 and the decoded control information to controller/processor 240. Base station 110 may include communication unit 244 and communicate to network controller 130 via communication unit 244. Network controller 130 may include communication unit 294, controller/processor 290, and memory 292.

Controllers/processors 240 and 280 may direct the operation at base station 110 and UE 120, respectively. Processor 240 and/or other processors and modules at base station 110, and/or processor 280 and/or other processors and modules at UE 120, may perform or direct processes for the techniques described herein. Memories 242 and 282 may store data and program codes for base station 110 and UE 120, respectively. A scheduler 246 may schedule UEs for data transmission on the downlink and/or uplink.

When transmitting data to the UE 120, the base station 110 may be configured to determine a bundling size based at least in part on a data allocation size and precode data in bundled contiguous resource blocks of the determined bundling size, wherein resource blocks in each bundle may be precoded with a common precoding matrix. That is, reference signals (RSs) such as UE-RS and/or data in the resource blocks may be precoded using the same precoder. The power level used for the UE-RS in each resource block (RB) of the bundled RBs may also be the same.

The UE 120 may be configured to perform complementary processing to decode data transmitted from the base station 110. For example, the UE 120 may be configured to determine a bundling size based on a data allocation size of received data transmitted from a base station in bundles of contiguous RBs, wherein at least one reference signal in resource blocks in each bundle are precoded with a common precoding matrix, estimate at least one precoded channel based on the determined bundling size and one or more RSs transmitted from the base station, and decode the received bundles using the estimated precoded channel.

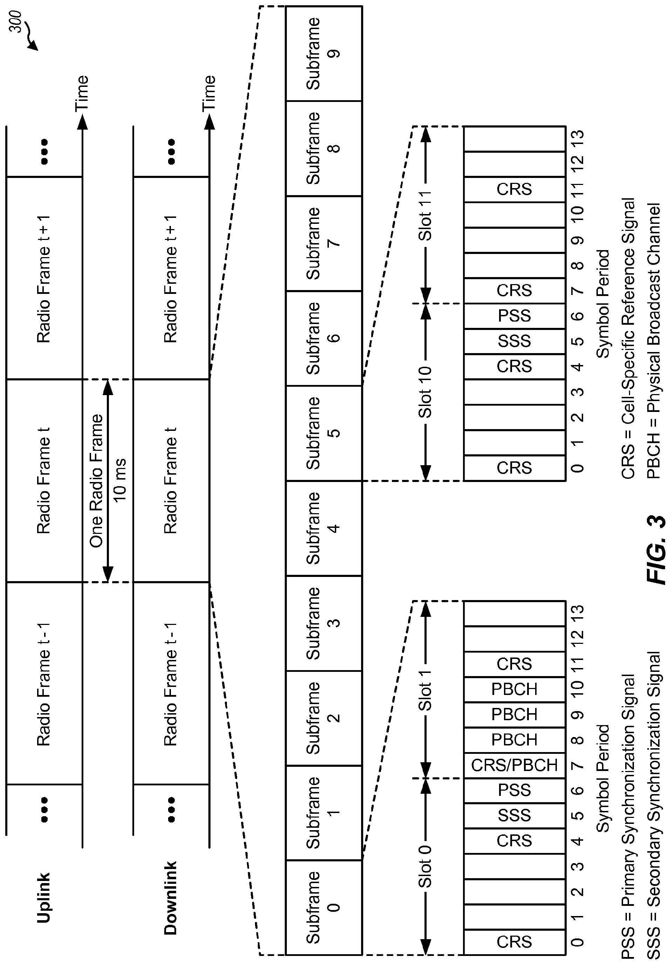

FIG. 3 shows an exemplary frame structure 300 for FDD in LTE. The transmission timeline for each of the downlink and uplink may be partitioned into units of radio frames. Each radio frame may have a predetermined duration (e.g., 10 milliseconds (ms)) and may be partitioned into 10 subframes with indices of 0 through 9. Each subframe may include two slots. Each radio frame may thus include 20 slots with indices of 0 through 19. Each slot may include $L$ symbol periods, e.g., seven symbol periods for a normal cyclic prefix (as shown in FIG. 3) or six symbol periods for an extended cyclic prefix. The $2L$ symbol periods in each subframe may be assigned indices of 0 through $2L$-1.

In LTE, an eNB may transmit a primary synchronization signal (PSS) and a secondary synchronization signal (SSS) on the downlink in the center 1.08 MHz of the system bandwidth for each cell supported by the eNB. The PSS and SSS may be transmitted in symbol periods 6 and 5, respectively, in subframes 0 and 5 of each radio frame with the normal cyclic prefix, as shown in FIG. 3. The PSS and SSS may be used by UEs for cell search and acquisition. The eNB may transmit a cell-specific reference signal (CRS) across the system bandwidth for each cell supported by the eNB. The CRS may be transmitted in certain symbol periods of each subframe and may be used by the UEs to perform channel estimation, channel quality measurement, and/or other functions. The eNB may also transmit a physical broadcast channel (PBCH) in symbol periods 0 to 3 in slot 1 of certain radio frames. The PBCH may carry some system information. The eNB may transmit other system information such as system information blocks (SIBs) on a physical downlink shared channel (PDSCH) in certain subframes. The eNB may transmit control information/data on a physical downlink control channel (PDCCH) in the first $B$ symbol periods of a subframe, where $B$ may be configurable for each subframe. The eNB may transmit traffic data and/or other data on the PDSCH in the remaining symbol periods of each subframe.

The PSS, SSS, CRS, and PBCH in LTE are described in 3GPP TS 36.211, entitled "Evolved Universal Terrestrial Radio Access (E-UTRA); Physical Channels and Modulation," which is publicly available.

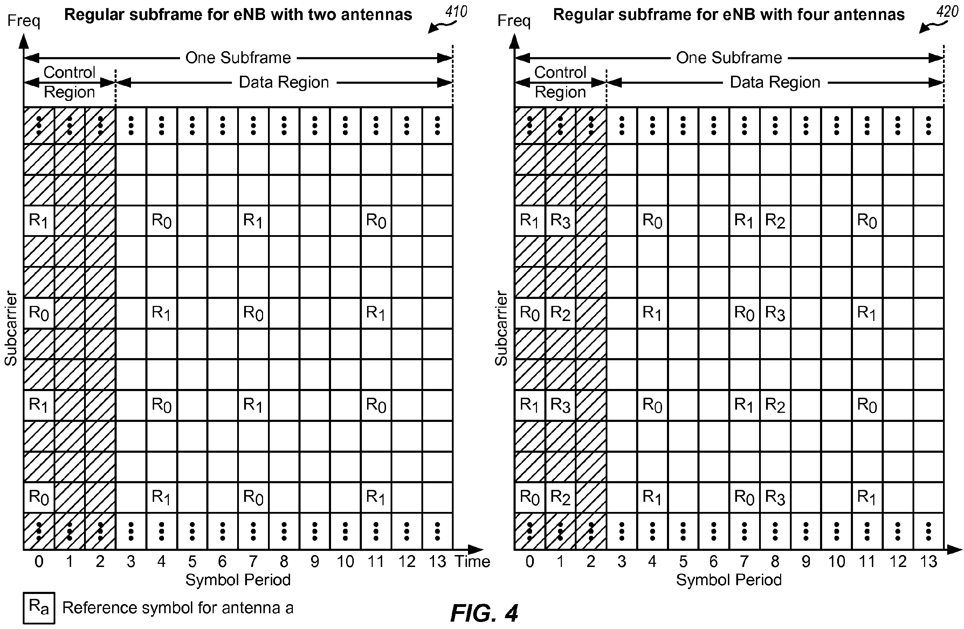

FIG. 4 shows two example subframe formats 410 and 420 for the downlink with a normal cyclic prefix. The available time frequency resources for the downlink may be partitioned into resource blocks. Each resource block may cover 12 subcarriers in one slot and may include a number of resource elements. Each resource element may cover one subcarrier in one symbol period and may be used to send one modulation symbol, which may be a real or complex value.

Subframe format 410 may be used for an eNB equipped with two antennas. A CRS may be transmitted from antennas 0 and 1 in symbol periods 0, 4, 7, and 11. A reference signal is a signal that is known *a priori* by a transmitter and a receiver and may also be referred to as pilot. A CRS is a reference signal that is specific for a cell, e.g., generated based on a cell identity (ID). In FIG. 4, for a given resource element with label Ra, a modulation symbol may be transmitted on that resource element from antenna a, and no modulation symbols may be transmitted on that resource element from other antennas. Subframe format 420 may be used for an eNB equipped with four antennas. A CRS may be transmitted from antennas 0 and 1 in symbol periods 0, 4, 7, and 11 and from antennas 2 and 3 in symbol periods 1 and 8. For both subframe formats 410 and 420, a CRS may be transmitted on evenly spaced subcarriers, which may be determined based on cell ID. Different eNBs may transmit their CRSs on the same or different subcarriers, depending on their cell IDs. For both subframe formats 410 and 420, resource elements not used for the CRS may be used to transmit data (e.g., traffic data, control data, and/or other data).

An interlace structure may be used for each of the downlink and uplink for FDD in LTE. For example, $Q$ interlaces with indices of 0 through $Q$-1 may be defined, where $Q$ may be equal to 4, 6, 8, 10, or some other value. Each interlace may include subframes that are spaced apart by $Q$ frames. In particular, interlace $q$ may include subframes $q$, $q+Q$, $q+2Q$, etc., where $q \in \{0,..., Q\text{-}1\}$.

The wireless network may support hybrid automatic retransmission request (HARQ) for data transmission on the downlink and uplink. For HARQ, a transmitter (e.g., an eNB 110) may send one or more transmissions of a packet until the packet is decoded correctly by a receiver (e.g., a UE 120) or some other termination condition is encountered. For synchronous HARQ, all transmissions of the packet may be sent in subframes of a single interlace. For asynchronous HARQ, each transmission of the packet may be sent in any subframe.

A UE may be located within the coverage of multiple eNBs. One of these eNBs may be selected to serve the UE. The serving eNB may be selected based on various criteria such as received signal strength, received signal quality, path loss, etc. Received signal quality may be quantified by a signal-to-interference-plus-noise ratio (SINR), or a reference signal received quality (RSRQ), or some other metric. The UE may operate in a dominant interference scenario in which the UE may observe high interference from one or more interfering eNBs.

## EXAMPLE UPLINK CHANNEL COVERAGE ENHANCEMENTS

Aspects of the present disclosure provided techniques for enhanced uplink channel coverage, for example, utilizing transmission time interval (hereinafter "TTI") bundling and/or bundling-dependent power control for uplink transmissions (e.g., RACH or PUSCH transmissions). The techniques may provide benefit to machine type communication (hereinafter "MTC") devices, as well as other types of devices that may have limited uplink coverage for any reason. For example, uplink coverage enhancements may be desirable in many cases, such as MTC devices in deep coverage holes (e.g., a basement), deployment of higher frequencies (e.g., high microwave or millimeter-wave frequencies), and/or coverage extension for low data rate users or delay tolerant users.

The focus of the traditional LTE design is on the improvement of spectral efficiency, ubiquitous coverage, and enhanced quality of service (QoS) support, etc. Current LTE system downlink (hereinafter "DL") and uplink (hereinafter "UL") link budgets are designed for coverage of high end devices, such as state-of-the-art smartphones and tablets.

However, low-cost, low-data rate devices need to be supported as well. For example, for MTC devices, maximum bandwidth may be reduced, a single receive radio frequency (RF) chain may be used, peak rate may be reduced, transmit power may be reduced, and half duplex operation may be performed.

In LTE Release 8, TTI (or subframe) bundling may be configured on a per-UE basis. The subframe bundling operation is configured by the parameter ttiBundling, which is provided by higher layers. Typically, TTI bundling is performed by sending data from a UE in an uplink shared channel over multiple TTIs to the base station; however, bundling is not applied to other uplink signals/traffic (e.g., uplink control information). The bundling size is fixed at 4 TTIs (subframes); that is, the physical uplink control channel (PUSCH) is transmitted in four consecutive subframes. The same hybrid automatic repeat request (HARQ) process number is used in each of the bundled subframes. The resource allocation size is restricted to no more than three resource blocks (RBs). The modulation order is set to 2 (quadrature phase-shift keying (QPSK)). Each bundle is treated as a single resource, for example, a single grant and a single HARQ acknowledgment are used each bundle.

TTI bundling is typically used for low rate traffic. For example, if VoIP packets cannot be transmitted in a single TTI due to a low uplink link budget, Layer 2 (L2) segmentation may be applied. For example, a VoIP packet may be segmented in four radio link control (RLC) protocol data units (PDUs) that are transmitted in four consecutive TTIs. 2-3 HARQ retransmissions may be targeted to achieve sufficient coverage.

The conventional approach suffers from several drawbacks. Each additional segment introduces a 1 byte RLC, 1 byte medium access control (MAC), and 3 byte L1 cyclic redundancy check (CRC) overhead. This may amount to, for example, a 15% overhead assuming a 33 byte RLC service data unit (SDU) size. In the case of 4 segments, there is an additional L1/L2 overhead of 45%.

Another drawback to the conventional approach is that HARQ transmissions/retransmissions for every segment may require grants on physical downlink control channel (PDCCH), consuming significant PDCCH resources.

Additionally, each HARQ transmission or retransmission is followed by HARQ feedback on physical HARQ indicator channel (PHICH). Assuming a negative acknowledgment-acknowledgment (NACK-ACK) error ratio of $10^{-3}$, the large number of HARQ feedback signals leads to high packet loss probabilities. For example, if 12 HARQ feedback signals are sent, the HARQ feedback error ratio may be on the order of $1.2*10^{-2}$. Packet loss rates of more than $10^{-2}$ are unacceptable for VoIP traffic.

Usage of only a single uplink grant and a single PHICH signal per TTI bundle would minimize L1 and L2 overhead since no L2 segmentation is required.

On the UL, TTI bundling has been proposed for random access channel (RACH), physical uplink control channel (PUCCH), and PUSCH.

For RACH transmissions, a UE typically determines transmission power for transmitting a RACH preamble ($P_{PRACH}$) as:

$$P_{PRACH} = \min\{ P_{cmax,c}(i), \text{ PREAMBLE\_RECEIVED\_TARGET\_POWER} +PL_c\}$$

$$[dBm],$$

where $P_{cmax,c}(i)$ is a UE transmit power defined for subframe i of serving cell c and PL is the downlink path loss estimate calculated in the UE for serving cell. To enhance RACH coverage, RACH repetition and/or bundling may be used. Further, in some cases, a RACH channel may be used to signal an eNB a degree of coverage enhancements needed by a UE. Different users may need different coverage enhancements for both UL and DL. This may present various issues, such as how to handle contention based vs. non-contention based RACH, whether/how to perform power ramping during the RACH procedure, and/or how to signal needed coverage enhancements.

According to certain aspects, a modified RACH procedure with bundling is provided. In some cases, initial power selection and bundling selection of RACH may be determined as follows:

$$P_{PRACH} = \min\{ P_{cmax,c}(i), \text{ PREAMBLE\_RECEIVED\_TARGET\_POWER} +PL_c\} [dBm]$$

a UE may then calculate a parameter

$$\text{delta\_power} = \text{PREAMBLE\_RECEIVED\_TARGET\_POWER} +PL_c - P_{cmax,c}(i)$$

If delta_power > 0 and RACH bundling is supported, the UE may select the bundling size according to delta_power. In some cases, the UE may select the bundling size based on the difference between target transmission power and maximum transmission power.

In some cases, a UE may adjust power and/or bundling on subsequent RACH transmissions if an initial RACH transmission fails. For example, power ramping and/or bundling size may be increased for subsequent RACH transmission when initial RACH fails. According to current standards, a UE ramps up RACH power in subsequent attempt if the previous RACH fails.

According to certain aspects presented herein, when bundling is supported, a UE may ramp up power first, and if a predetermined transmission power level (e.g., max power) is reached, the UE may select the bundling size for the next RACH based again on the difference of the intended power and max power.

In some cases, a UE may also apply bundling before maximum power is reached or transmit at less power when bundling is used. For example, if the default bundling size is 16 and a user only wants to have an effective bundling size of 8, it can reduce the transmission power. In some cases, the power level may be started at a maximum value and then decreased (e.g., with an increase in bundling size). For example, when power is at the maximum value, a bundling size of 32 may be used, and when power is at half of the maximum value, a bundling size of 64 may be used.

In some cases, a UE may apply RACH bundling and bundling size increases in a subsequent RACH attempt whenever the RACH power reaches a predetermined level (e.g., a maximum value). As a first example, if a first RACH attempt, performed with maximum power and no bundling, fails, a second RACH attempt may be performed with maximum power and 2x bundling. If the second RACH attempt fails, a third RACH attempt may be performed with 4x bundling (and so on, for example, until maximum bundling levels are reached). As another example, a first RACH attempt may be performed with a bundling size of 4 and a second RACH attempt with a bundling size of 16 (and so on).

In some cases, because of the bundled RACH processing, the preamble received target power with bundled reception can be different from the target power of RACH without bundling. Therefore, according to certain aspects, a different PREAMBLE_RECEIVED_TARGET_POWER may used for different group of UEs, such as UEs with bundled RACH. This new parameter may be referred to as PREAMBLE_RECEIVED_TARGET_POWER_BUNDLE and may be broadcasted in SIB. This parameter is not limited to the bundled case. For example, it may be used for VOIP, an UE in the basement, etc. This may be a cell specific parameter. In some cases, to support different sets of users with different target power levels, additional sets may be used. One specific example of users that might use a different PREAMBLE_RECEIVED_TARGET_POWER would be users with bundling. Since an eNB applies coherent and/or non-coherent combining across the bundled RACH, the target SNR and target RACH power can be different from the regular RACH without bundling.

In a similar manner, a separate $P_{O\_PUSCH\_bundle}$ value may also be introduced in the formula below to replace $P_{O\_PUSCH}$ whenever bundle is used to set the target power for bundled PUSCH transmission:

$$P_{\mathrm{PUSCH,c}}(i) = \min\left\{ \begin{array}{l} P_{\mathrm{CMAX},c}(i), \\ 10\log_{10}\left(M_{\mathrm{PUSCH,c}}(i)\right) + P_{\mathrm{O\_PUSCH,c}}(j) + \alpha_c(j)\cdot PL_c + \Delta_{\mathrm{TF,c}}(i) + f_c(i) \end{array} \right\}$$

More specifically, a new $P_{O\_nominal\_PUSCH}$ and/or delta_preamble_msg3 may be introduced for a new group of users (e.g., MTC users or users supporting bundling). Similarly, one can also introduce a separate $P_{O\_PUCCH\_bundle}$ for PUCCH. More specifically, a new $P_{O\_nominal\_PUCCH}$ may be introduced for the new group of users.

According to certain aspects, different RACH bundling size for contention and non-contention based RACH may be supported. For example, for contention based RACH, a relatively conservative RACH bundling size (or the one determined by DL path loss measurements) may be used. For non-contention based RACH, an eNB indicated RACH bundling size may be used.

According to certain aspects, the bundling size of non-contention based RACH can be broadcasted in SIB, signaled to UE in RRC or dynamically signaled. For example, for an ordered (commanded by eNB) RACH, the RACH bundling size may be signaled in PDCCH (e.g., signaling RACH bundling size 4 for ordered RACH).

According to certain aspects, for RACH repetition, for example, of format 1 (RACH1), a UE may transmit exact repetition of format 1 with a cyclic prefix (CP) and RACH sequence (e.g., CP + RACH1 + CP + RACH1 + CP + RACH1). This may be a straight forward repetition, which may result in a fairly simple implementation. According to certain aspects, a UE may only transmit one CP portion, and repeat the RACH sequences (e.g., CP + RACH1 + RACH1 + RACH1), which may reduce overhead and be more efficient.

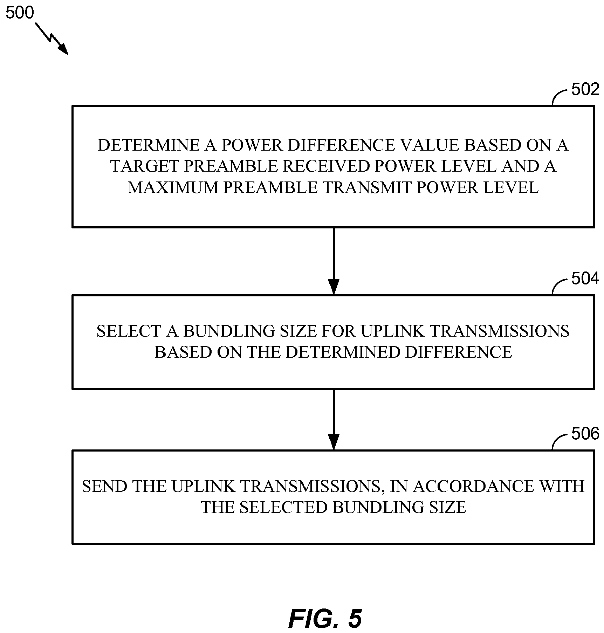

FIG. 5 illustrates example operations 500 for wireless communications, in accordance with certain aspects of the present disclosure.

The operations 500 may be performed, for example, by a UE (e.g., UE 120). The operations 500 may begin, at 502, determining a power difference value based on a target preamble received power level and a maximum preamble transmit power level. At 504, the UE may select a bundling size for uplink transmissions based on the determined difference and, at 506, send the uplink transmission, in accordance with the selected bundling size.

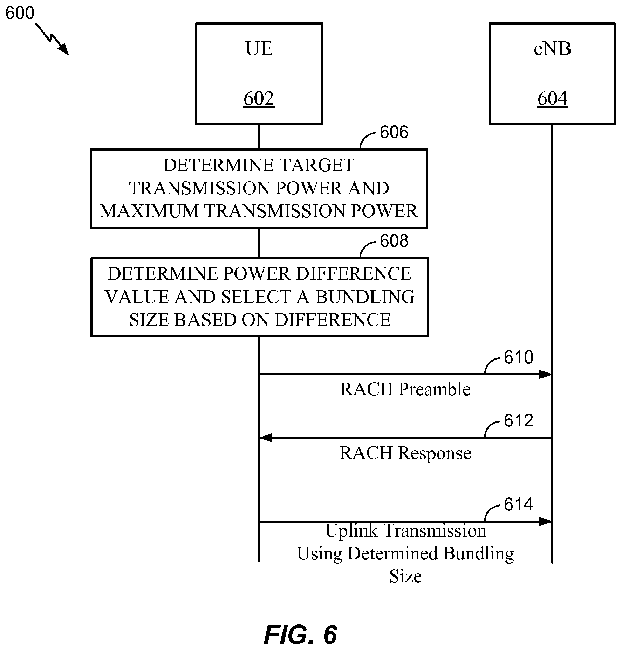

FIG. 6 illustrates an example message flow 600 showing messages that may be exchanged, for example, between a UE 602 and an eNB 604 (*e.g.,* in accordance with operations 500 of FIG. 5). A UE 602 may, at 606, determine a target preamble received power and a maximum preamble transmit power level. Information about the target preamble received power may be determined based on information received, for example, via system information messages transmitted from an eNB. At 608, UE 602 may determine a bundling size for uplink transmissions based on a difference between the target preamble received power and a maximum preamble transmit power level. UE 602 may transmit one or more messages to eNB 604 based on the determined bundling size. For example, these messages may include transmitting a RACH preamble 610 (soliciting the transmittal of a RACH response 612 from eNB 604) and performing an uplink transmission 612 (e.g., of uplink data) to eNB 604.

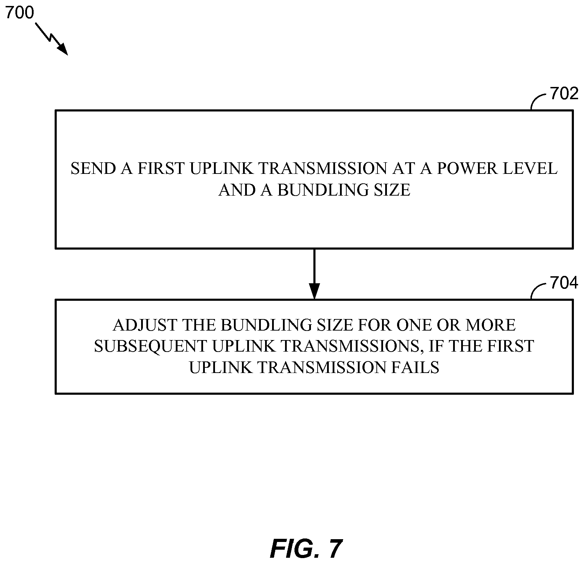

FIG. 7 illustrates example operations 700 for wireless communications by a UE, in accordance with certain aspects of the present disclosure.

The operations 700 may begin, at 702, by sending a first uplink transmission at a power level and a bundling size. At 704, the UE may adjust the bundling size for one or more subsequent uplink transmissions, if the first uplink transmission fails.

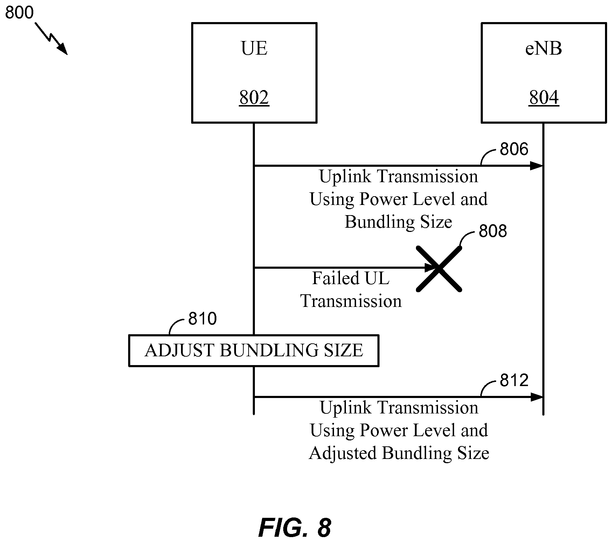

FIG. 8 illustrates an example message flow 800 showing messages that may be exchanged, for example, between a UE 802 and an eNB 804 (*e.g.,* in accordance with operations 700 of FIG. 7). As illustrated, the UE 802 performs an uplink transmission to eNB 804. Uplink transmissions 806 may be performed using a power level and a bundling size. As illustrated, uplink transmission 806 was successfully received by eNB 804. A failed uplink transmission 808, performed using the power level and bundling size of uplink transmission 806, may prompt UE 802 to adjust a bundling size at 810. After adjustment of the bundling size, UE 802 may perform another uplink transmission 812 using the power level and the adjusted bundling size.

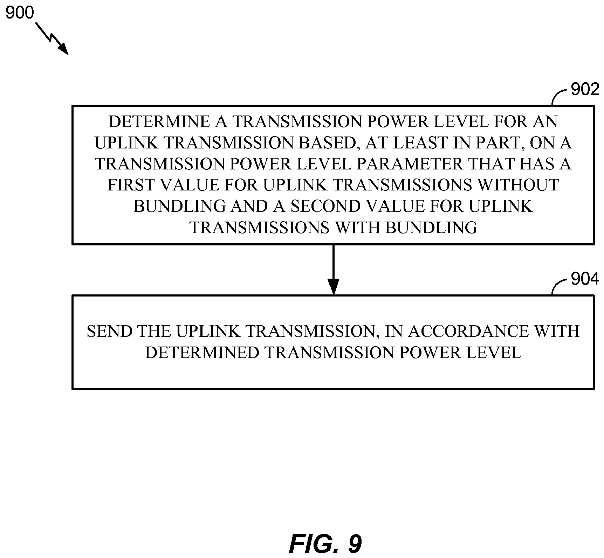

FIG. 9 illustrates example operations 900 for wireless communications by a UE, in accordance with certain aspects of the present disclosure.

The operations 900 may begin, at 902, by determining a transmission power level for an uplink transmission based, at least in part, on a transmission power level parameter that has a first value for uplink transmissions without bundling and a second value for uplink transmissions with bundling. At 904, the UE may send the uplink transmission, in accordance with determined transmission power level.

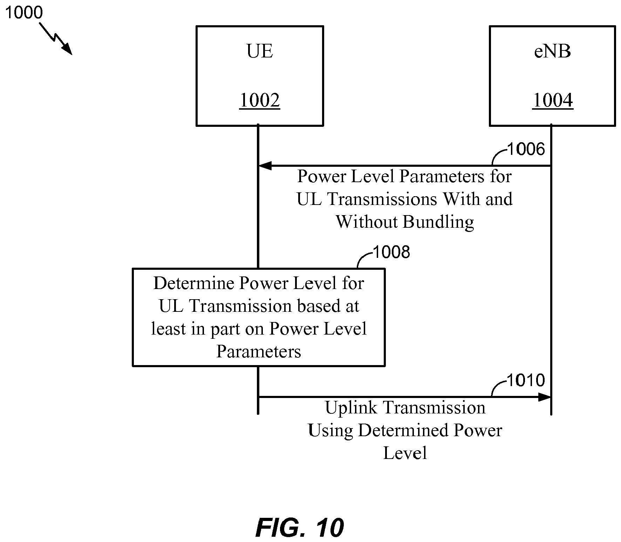

FIG. 10 illustrates an example message flow 1000 showing messages that may be exchanged, for example, by a UE 1002 and an eNB 1004 (*e.g.,* in accordance with operations 900 of FIG. 9). A UE 1002 may receive information 1006 from an eNB 1004. Information 1006 may include, for example, power level parameters for performing uplink transmissions with and without bundling. At 1008, the UE may determine a power level to use for uplink transmissions based, at least in part, on the power level parameters, and may perform an uplink transmission 1010 using the determined power level.

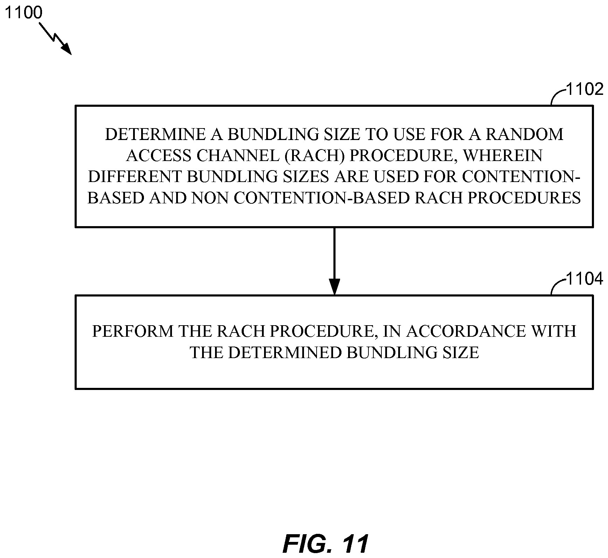

FIG. 11 illustrates example operations 1100 for wireless communications by a UE, in accordance with certain aspects of the present disclosure.

The operations 1100 may begin, at 1102, by determining a bundling size to use for a random access channel (RACH) procedure, wherein different bundling sizes are used for contention-based and non contention-based RACH procedures. At 1104, the UE may perform the RACH procedure, in accordance with the determined bundling size.

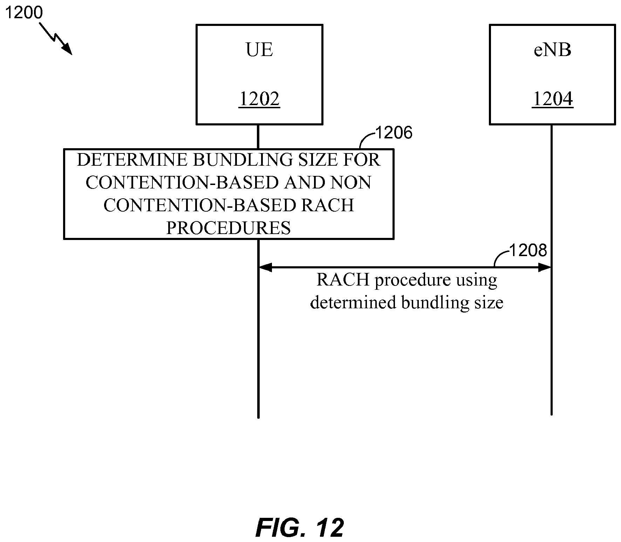

FIG. 12 illustrates an example message flow 1200 showing messages that may be exchanged, for example, between a UE 1202 and an eNB 1204 (*e.g.,* in accordance with operations 1100 of FIG. 11). As different bundling sizes may be used for contention-based and non contention-based RACH procedures, the UE 1202 may determine the bundling size to use based on whether the RACH procedure is a contention-based or non contention-based procedure at 1206. Using the determined bundling size, the UE may perform the RACH procedure 1208 with eNB 1204.

The various operations of methods described above may be performed by any suitable means capable of performing the corresponding functions. The means may include various hardware and/or software/firmware component(s) and/or module(s), including, but not limited to a circuit, an application specific integrated circuit (ASIC), or processor. Generally, where there are operations illustrated in the Figures, those operations may be performed by any suitable corresponding counterpart means-plus-function components.

It is understood that the specific order or hierarchy of steps in the processes disclosed is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or combinations thereof.

Those of skill would further appreciate that the various illustrative logical blocks, modules, circuits, and algorithm steps described in connection with the disclosure herein may be implemented as electronic hardware, software/firmware, or combinations thereof. To clearly illustrate this interchangeability of hardware and software/firmware, various illustrative components, blocks, modules, circuits, and steps have been described above generally in terms of their functionality. Whether such functionality is implemented as hardware or software/firmware depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software/firmware module executed by a processor, or in a combination thereof. A software/firmware module may reside in RAM memory, flash memory, PCM (phase change memory), ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software/firmware, or combinations thereof. If implemented in software/firmware, the functions may be stored on or transmitted over as one or more instructions or code on a computer-readable medium. Computer-readable media include both computer storage media and communication media including any medium that facilitates transfer of a computer program from one place to another. A storage medium may be any available medium that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where *disks* usually reproduce data magnetically, while *discs* reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

As used herein, a phrase referring to "at least one of" a list of items refers to any combination of those items, including single members. As an example, "at least one of *a, b,* or *c*" is intended to cover *a, b, c, a-b, a-c, b-c,* and *a-b-c.*

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples and designs described herein, but is to be accorded the widest scope consistent with the principles and novel features disclosed herein.

**In the following, further embodiments are described to facilitate the understanding of the invention:**

1. A method for wireless communications by a user equipment (UE), comprising:

   determining a power difference value based on a target preamble received power level and a maximum preamble transmit power level;
   selecting a bundling size for uplink transmissions based on the determined power difference value; and
   sending the uplink transmissions, in accordance with the selected bundling size.

2. The method of embodiment 1, wherein the power difference value is also based on a downlink path loss estimate.

3. The method of embodiment 1, wherein the uplink transmission comprises RACH preamble transmission.

4. The method of embodiment 3, wherein the RACH preamble transmission comprises a RACH repetition sequence.

5. The method of embodiment 3, wherein a bundling size for uplink transmission is selected based on the determined power difference value only if the power difference value is greater than zero.

6. A method for wireless communications by a user equipment (UE), comprising:

sending a first uplink transmission at a power level and a bundling size; and
adjusting the bundling size for one or more subsequent uplink transmissions, if the first uplink transmission fails.

7. The method of embodiment 6, wherein the first uplink transmission comprises a RACH preamble transmission.

8. The method of embodiment 7, wherein the RACH preamble transmission comprises a RACH repetition sequence.

9. The method of embodiment 6, wherein adjusting the bundling size for one or more subsequent uplink transmissions comprises:

determining a power difference value based on a target preamble received power level and a maximum preamble transmit power level; and
selecting a bundling size for uplink transmissions based on the determined power difference value.

10. The method of embodiment 6, wherein adjusting the bundling size for one or more subsequent uplink transmissions comprises:
adjusting the bundling size for one or more subsequent uplink transmissions after transmission power for a previous uplink transmission has reached a predetermined level.

11. The method of embodiment 10, wherein the predetermined level corresponds to a maximum uplink transmission power level.

12. The method of embodiment 10, further comprising:
reducing transmission power for subsequent uplink transmissions after increasing the bundling size.

13. A method for wireless communications by a user equipment (UE), comprising:

determining a transmission power level for an uplink transmission based, at least in part, on a transmission power level parameter that has a first value for uplink transmissions without bundling and a second value for uplink transmissions with bundling; and
sending the uplink transmission, in accordance with the determined transmission power level.

14. The method of embodiment 13, wherein the uplink transmission comprises a RACH preamble transmission.

15. The method of embodiment 14, wherein the RACH preamble transmission comprises a RACH repetition sequence.

16. The method of embodiment 13, wherein the uplink transmission comprises a physical uplink shared channel (PUSCH) transmission.

17. The method of embodiment 13, further comprising receiving at least one of the first and second values in a broadcast system information block (SIB).

18. A method for wireless communications by a user equipment (UE), comprising:

determining a bundling size to use for a random access channel (RACH) procedure, wherein different bundling sizes are used for contention-based and non contention-based RACH procedures; and

**EP 4 280 784 A2**

performing the RACH procedure, in accordance with the determined bundling size.

19. The method of embodiment 18, wherein a bundling size for a contention based RACH procedure is determined based, at least in part, on downlink path loss estimations.

20. The method of embodiment 18, wherein a bundling size for a non-contention based RACH procedure is indicated by base station.

21. The method of embodiment 18, wherein:

the RACH procedure is ordered by a base station; and
the base station indicates a bundling size to use for the RACH procedure in a physical downlink control channel (PDCCH).

**Claims**

1. A method (900) for wireless communications by a user equipment, UE, comprising:

determining (902) a transmission power level for an uplink transmission based, at least in part, on a transmission power level parameter that has a first value for uplink transmissions without bundling and a second value for uplink transmissions with bundling; and
sending (904) the uplink transmission, in accordance with the determined transmission power level.

2. The method (900) of claim 1, wherein the uplink transmission comprises a RACH preamble transmission.

3. The method (900) of claim 2, wherein the RACH preamble transmission comprises a RACH repetition sequence.

4. The method (900) of claim 1, wherein the uplink transmission comprises a physical uplink shared channel, PUSCH, transmission.

5. The method (900) of claim 1, further comprising receiving at least one of the first and second values in a broadcast system information block, SIB.

6. An apparatus for wireless communications by a UE, comprising:

means for determining a transmission power level for an uplink transmission based, at least in part, on a transmission power level parameter that has a first value for uplink transmissions without bundling and a second value for uplink transmissions with bundling and
means for sending the uplink transmission, in accordance with the determined transmission power level.

7. The apparatus of claim 6, wherein the uplink transmission comprises a RACH preamble transmission.

8. The apparatus of claim 7, wherein the RACH preamble transmission comprises a RACH repetition sequence.

9. The apparatus of claim 6, wherein the uplink transmission comprises a physical uplink shared channel, PUSCH, transmission.

10. The apparatus of claim 6, further comprising means for receiving at least one of the first and second values in a broadcast system information block, SIB.

11. Computer program comprising instructions which, when executed, cause a computer to perform a method according to one of claims 1 - 5.

FIG. 1

FIG. 2

300

| Uplink | ••• | Radio Frame t-1 | Radio Frame t | Radio Frame t+1 | ••• |

→Time

One Radio Frame
10 ms

| Downlink | ••• | Radio Frame t-1 | Radio Frame t | Radio Frame t+1 | ••• |

→Time

| Subframe 0 | Subframe 1 | Subframe 2 | Subframe 3 | Subframe 4 | Subframe 5 | Subframe 6 | Subframe 7 | Subframe 8 | Subframe 9 |

←— Slot 0 —→ ←— Slot 1 —→

| CRS | | | | CRS | SSS | PSS | CRS/PBCH | PBCH | PBCH | PBCH | CRS | | |
| 0 | 1 | 2 | 3 | 4 | 5 | 6 | 7 | 8 | 9 | 10 | 11 | 12 | 13 |

Symbol Period

←— Slot 10 —→ ←— Slot 11 —→

| CRS | | | | CRS | SSS | PSS | CRS | | | CRS | | | |
| 0 | 1 | 2 | 3 | 4 | 5 | 6 | 7 | 8 | 9 | 10 | 11 | 12 | 13 |

Symbol Period

PSS = Primary Synchronization Signal
SSS = Secondary Synchronization Signal

CRS = Cell-Specific Reference Signal
PBCH = Physical Broadcast Channel

*FIG. 3*

**Regular subframe for eNB with two antennas** _410_

**Regular subframe for eNB with four antennas** _420_

$R_a$ Reference symbol for antenna a

*FIG. 4*

500

┌─────────────────────────────────────────────────────────┐ 502
│                                                         │
│   DETERMINE A POWER DIFFERENCE VALUE BASED ON A          │
│   TARGET PREAMBLE RECEIVED POWER LEVEL AND A             │
│   MAXIMUM PREAMBLE TRANSMIT POWER LEVEL                  │
│                                                         │
└─────────────────────────────────────────────────────────┘

┌─────────────────────────────────────────────────────────┐ 504
│                                                         │
│   SELECT A BUNDLING SIZE FOR UPLINK TRANSMISSIONS        │
│   BASED ON THE DETERMINED DIFFERENCE                     │
│                                                         │
└─────────────────────────────────────────────────────────┘

┌─────────────────────────────────────────────────────────┐ 506
│                                                         │
│   SEND THE UPLINK TRANSMISSIONS, IN ACCORDANCE WITH      │
│   THE SELECTED BUNDLING SIZE                            │
│                                                         │
└─────────────────────────────────────────────────────────┘

*FIG. 5*

600

| UE | | eNB |
|---|---|---|
| **602** | | **604** |

606

DETERMINE TARGET
TRANSMISSION POWER AND
MAXIMUM TRANSMISSION POWER

608

DETERMINE POWER DIFFERENCE
VALUE AND SELECT A BUNDLING
SIZE BASED ON DIFFERENCE

610

RACH Preamble

612

RACH Response

614

Uplink Transmission
Using Determined Bundling
Size

## FIG. 6

700

702

SEND A FIRST UPLINK TRANSMISSION AT A POWER LEVEL
AND A BUNDLING SIZE

704

ADJUST THE BUNDLING SIZE FOR ONE OR MORE
SUBSEQUENT UPLINK TRANSMISSIONS, IF THE FIRST
UPLINK TRANSMISSION FAILS

*FIG. 7*

800

| UE | eNB |
|---|---|
| 802 | 804 |

806

Uplink Transmission
Using Power Level and
Bundling Size

808

Failed UL
Transmission

810

ADJUST BUNDLING SIZE

812

Uplink Transmission
Using Power Level and
Adjusted Bundling Size

*FIG. 8*

900

902

DETERMINE A TRANSMISSION POWER LEVEL FOR AN UPLINK TRANSMISSION BASED, AT LEAST IN PART, ON A TRANSMISSION POWER LEVEL PARAMETER THAT HAS A FIRST VALUE FOR UPLINK TRANSMISSIONS WITHOUT BUNDLING AND A SECOND VALUE FOR UPLINK TRANSMISSIONS WITH BUNDLING

904

SEND THE UPLINK TRANSMISSION, IN ACCORDANCE WITH DETERMINED TRANSMISSION POWER LEVEL

*FIG. 9*

1000

UE

1002

eNB

1004

1006

Power Level Parameters for
UL Transmissions With and
Without Bundling

1008

Determine Power Level for
UL Transmission based at
least in part on Power Level
Parameters

1010

Uplink Transmission
Using Determined Power
Level

**FIG. 10**

1100

1102

DETERMINE A BUNDLING SIZE TO USE FOR A RANDOM ACCESS CHANNEL (RACH) PROCEDURE, WHEREIN DIFFERENT BUNDLING SIZES ARE USED FOR CONTENTION-BASED AND NON CONTENTION-BASED RACH PROCEDURES

1104

PERFORM THE RACH PROCEDURE, IN ACCORDANCE WITH THE DETERMINED BUNDLING SIZE

*FIG. 11*

1200

UE

1202

eNB

1204

1206

DETERMINE BUNDLING SIZE FOR
CONTENTION-BASED AND NON
CONTENTION-BASED RACH
PROCEDURES

1208

RACH procedure using
determined bundling size

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61877920

**Non-patent literature cited in the description**

- Evolved Universal Terrestrial Radio Access (E-UTRA); Physical Channels and Modulation. *3GPP TS 36.211*